# EUROPEAN PATENT APPLICATION

(11) **EP 3 636 917 A1**
(43) Date of publication of application: **15.04.2020**
(21) Application number: 18200062.0
(22) Date of filing: 12.10.2018
(51) Int. Cl.: F03D 80/60

(54) **A COOLING SYSTEM**

(71) Applicant: Nissens Cooling Solutions A/S, 8700 Horsens (DK)
(72) Inventor: NIELSEN, Otto, 8700 Horsens (DK); MØRKHOLT, Morten, 8700 Horsens (DK)
(74) Representative: Hoffmann Dragsted A/S

(57) **Abstract**

The present invention relates to a cooling system for a wind turbine, comprising a cooling circuit arranged inside a nacelle, a cooling fluid circulating in the cooling circuit, a cooling device having a cooling area, the cooling device being configured to be arranged on a first face of the nacelle, the first face has a longitudinal extension in a wind direction, the cooling circuit and the cooling device being fluidly connected via one or more connection unit(s), so that the cooling fluid may flow in the cooling device and the cooling circuit, the cooling device being configured to be movable between a first position in which the cooling area is substantially perpendicular to the first face and a second position in which the cooling area is substantially parallel with the first face, wherein the connection unit comprises a fluid swivel, the fluid swivel being configured to provide fluid communication between the cooling device and the cooling circuit at least in the first position of the cooling device and the second position of the cooling device.

## Description

The present invention relates to a cooling system for a wind turbine, comprising a cooling circuit arranged inside a nacelle, a cooling fluid circulating in the cooling circuit, a cooling device having a cooling area, the cooling device being configured to be arranged on a first face of the nacelle, the first face has a longitudinal extension in a wind direction, the cooling circuit and the cooling device being fluidly connected via one or more connection unit(s), so that the cooling fluid may flow in the cooling device and the cooling circuit, the cooling device being configured to be movable between a first position, in which the cooling area is substantially perpendicular to the first face and a second position, in which the cooling area is substantially parallel with the first face.

A wind turbine converts wind power into electrical energy by using a generator placed among other components in the nacelle of the wind turbine. When the generator converts energy, the air surrounding the components is heated and the components themselves are thus also heated.

When the components are heated, the efficiency with which the conversion occurs is substantially decreased. In order to cool the components, the walls and the air surrounding the components are cooled down by means of a cooling device positioned on top of the nacelle. Thus, the cool outside air passes through the cooling device and cools a cooling fluid within the cooling device, which is subsequently used to cool the walls of the components in the nacelle or the air surrounding the components.

Since the sizes and yield of the wind turbines increases, the cooling need increases as well which influences on the sizes of the cooling devices to be positioned on the nacelles. Hence, the sizes of the cooling devices both in relation to height and width increase.

Due to the increase in sizes, handling issues of the cooling devices in relation to mounting the cooling devices on the nacelle at the erection sites often occur as well as transportation challenges from the manufacturing facility to the erection site.

It is an object of the present invention to wholly or partly overcome the above disadvantages and drawbacks of the prior art. More specifically, it is an object to provide an improved cooling system for a wind turbine facilitating mounting, testing and transportation of said cooling system.

The above objects, together with numerous other objects, advantages and features, which will become evident from the below description, are accomplished by a solution in accordance with the present invention by a cooling system for a wind turbine, comprising
- a cooling circuit arranged inside a nacelle,
- a cooling fluid circulating in the cooling circuit,
- a cooling device having a cooling area, the cooling device being configured to be arranged on a first face of the nacelle, the first face having a longitudinal extension in a wind direction,
- the cooling circuit and the cooling device being fluidly connected via one or more connection unit(s) so that the cooling fluid may flow in the cooling device and the cooling circuit,
- the cooling device being configured to be movable between a first position in which the cooling area is substantially perpendicular to the first face and a second position in which the cooling area is substantially parallel with the first face,
wherein the connection unit comprises a fluid swivel, the fluid swivel being configured to provide pressurised fluid communication between the cooling device and the cooling circuit at least in the first position of the cooling device and the second position of the cooling device.

Hereby is obtained that the cooling system can be mounted on a nacelle and fully tested on a manufacturing facility, before it is transported to the erection site. In addition, when the nacelle with the cooling system is in operation on a wind turbine, service and maintenance are facilitated by the cooling device of the cooling system which may be moved from the first position to the second position while there is pressurized fluid communication between the cooling circuit and the cooling device in both positions. Furthermore, it is also possible to move the cooling device to the second position if, for instance, the cooling area of the cooling device is to be minimised during operation of the wind turbine or for protecting the cooling device during high winds and gusts.

Furthermore, the fluid swivel may have a first swivel position and a second swivel position, the fluid swivel having the first swivel position when the cooling device is in the first position and the second swivel position when the cooling device is in the second position, the fluid swivel is configured to provide pressurised fluid communication between the cooling device and the cooling circuit at least in both the first swivel position and the second swivel position.

Moreover, the fluid swivel may comprise a first part and a second part being fluidly connected to each other, the first part is fluidly connected with the cooling circuit and the second part is connected with the cooling device.

The second part may be rotably connected with the first part or vice versa.

Also, the fluid swivel may comprise a third part being fluidly connected with the first part; the third part is connected with the cooling device.

The third part may be rotably connected with the first part or vice versa.

In addition, the second part may be connected with a first device inlet of the cooling device and the third part is connected with a first device outlet of the cooling device.

Furthermore, the first part may have a first port connected with the second part and a circuit outlet, respectively, and the first part has a second port connected with the third part and a circuit inlet, respectively.

Additionally, the second part may be connected with the first device inlet of the cooling device and the third part is connected with a second device inlet of the cooling device.

The first part may have a first port connected with both the second part and the third part and a circuit outlet, respectively.

Moreover, the third part may be connected with the first device outlet of the cooling device and the second part is connected with a second device outlet of the cooling device.

The first part may have a first port connected with both the second part and the third part and a circuit inlet, respectively.

In addition, sealing elements may be arranged between the first part and the second part and/or sealing elements may be arranged between the first part and the third part.

Also, the cooling device when being moved between the first position and the second position, or vice versa, may have a plurality of intermediate positions, the fluid swivel being configured to provide fluid communication between the cooling device and the cooling circuit in the plurality of intermediate positions.

One or more support unit(s) may be arranged between the cooling device and the first face of the nacelle. The support unit may be a hinge, a pivot, a rod, a telescopic arm, strut, or similar.

The telescopic arm may be hydraulic controlled. Also, the hinge or pivot may also be driven by a motor for assisting in moving the cooling device from the first position to the second position and vice versa.

Furthermore, the cooling device may be a passive cooling device.

The cooling device may comprise
- at least one heat exchanger core configured to extend across the wind direction and to define a cooling area of the cooling device, the heat exchanger core having a first side and a second side arranged opposite the first side in relation to the heat exchanger core,
- a first manifold being arranged along the first side and a second manifold being arranged along the second side, each in fluid communication with the at least one heat exchanger core, the first manifold and the second manifold are extending parallel along the cooling area.

Also, the cooling device may comprise a plurality of heat exchanger cores in a row extending along the cooling area.

Each heat exchanger core may be configured to be moved from the first position to the second position, or vice versa, independently of the other heat exchanger cores.

Also, the cooling system may comprise a plurality of cooling devices.

The cooling device may further comprise an expansion vessel in fluid connection with one of the manifolds.

The first manifold and second manifold may each have a proximal end and a distal end along a length l of the cooling area, whereby one of the manifolds comprises a coolant inlet arranged in the proximity of the proximal end, and one of the manifolds comprises a coolant outlet arranged in the proximity of the distal end.

Furthermore, the second manifold may comprise the coolant inlet and the coolant outlet.

The manifolds may be connected by means of a first fluid connection and a second fluid connection, the second manifold comprises a proximal second manifold compartment and a distal second manifold compartment, said manifold compartments being separate from one another, and whereby the first manifold compartment comprises a proximal first manifold compartment and a distal first manifold compartment, said manifold compartments being separate from one another, whereby the first fluid connection connects the proximal second manifold compartment and the distal first manifold compartment, and the second fluid connection connects the proximal first manifold compartment and the distal second manifold compartment.

Moreover, the first fluid connection may be configured to distribute approximately 45-55% of the cooling fluid entering the proximal second manifold compartment directly to the distal first manifold compartment without the cooling fluid entering the heat exchanger cores.

The length I may be approximately 3-10 metres and a height h of said cooling area defined by the at least one heat exchanger being approximately 1-4 metres.

Meteorology equipment may be arranged in connection with the cooling device.

The meteorology equipment may be an anemometer, other equipment may also be arranged in connection with the cooling device, such as for instance light.

The present invention also relates to a wind turbine comprising a cooling system as described above.

The present invention moreover relates to a method for preparing a cooling system as described above, comprising
- providing a nacelle at a manufacturing facility,
- arranging the cooling circuit inside the nacelle,
- mounting the cooling device on the first face of the nacelle,
- filling the cooling circuit and the cooling device with a cooling fluid,
- testing the cooling system while the cooling device is in the first position for ensuring fluid communication between the cooling device and the cooling circuit in the first position,
- arranging the cooling device in the second position,
- testing the cooling system while the cooling device is in the second position for ensuring fluid communication between the cooling device and the cooling circuit in the second position,
- transporting the nacelle with the cooling system to an erection site, while the cooling device is in its second position and having pressurised fluid communication between the cooling device and the cooling circuit.

The invention and its many advantages will be described in more detail below with reference to the accompanying schematic drawings, which for the purpose of illustration show some non-limiting embodiments and in which:
Fig. 1 shows a part of a wind turbine with the cooling system,
Fig. 2 shows a schematic view of a nacelle and the cooling system,
Figs. 3a-3b show two different embodiments of a fluid swivel
Figs. 4-5 show other different embodiments of a fluid swivel,
Figs. 6-8 show an embodiment of the fluid swivel,
Fig. 9 shows the cooling system of the invention, and
Figs. 10-12 show an embodiment of a cooling device.

All the figures are highly schematic and not necessarily to scale, and they show only those parts which are necessary in order to elucidate the invention, other parts being omitted or merely suggested.

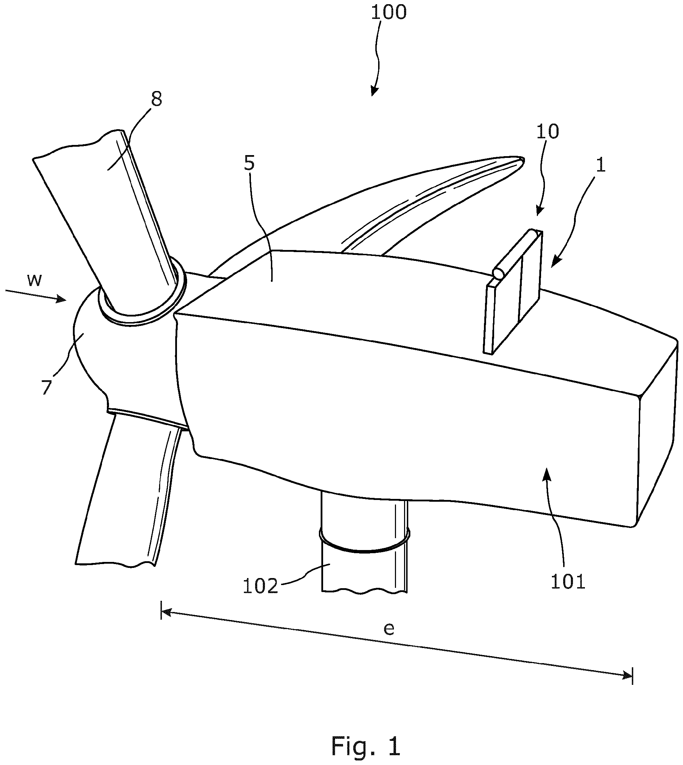

Fig. 1 shows a perspective view of a wind turbine 100 comprising a nacelle 101 and a cooling system 1 having a cooling device 10. The nacelle 101 is situated on top of a tower 102 and has a front facing a hub 7 in which a plurality of rotor blades 8, normally three blades, is fastened. The nacelle 101 may house a generator and other components used for driving the conversion process of wind energy to electricity - also called the drive train. When producing electricity, the drive train produces a lot of heat, resulting in a less effective conversion process.

In order to cool the components and other parts of the nacelle, a cooling device 10 of the cooling system is arranged outside the nacelle 101. Wind flowing along a longitudinal extension of the nacelle 101 flows in through at least one cooling area of the cooling device 10 and cools a fluid within the cooling device. The cooled fluid exchanges heat with the parts of the nacelle 101 or equipment to be cooled. The nacelle 101 has a first face 5 with a longitudinal extension e in the wind direction w. The cooling device may be placed in front of, in the middle of or in the back of the nacelle.

The present invention will mainly be described in connection with an upwind wind turbine, i.e. a wind turbine where the nacelle 101 is placed downwind from the wind turbine blades 8. However, the invention may also advantageously be implemented in a downwind wind turbine, i.e. a wind turbine where the nacelle is placed upwind from the wind turbine blades.

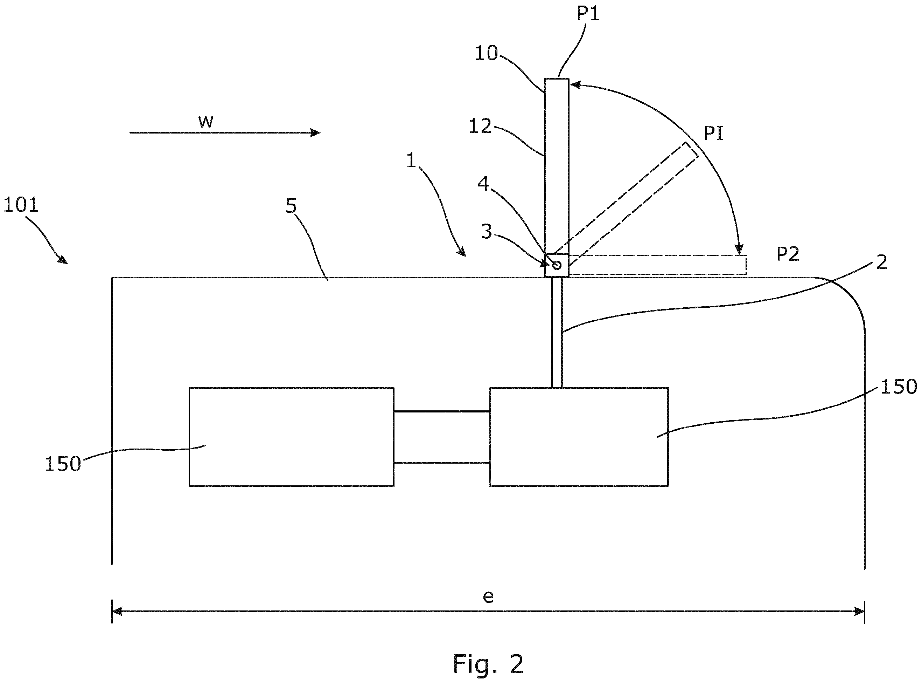

Fig. 2 shows a schematic view of a nacelle 101 and the cooling system 1 according to the present invention. The cooling system 1 comprises a cooling circuit 2 arranged inside the nacelle 101. In the cooling circuit a cooling fluid is circulating. The cooling circuit 2 is fluidly connected with one or more components 150 inside the nacelle

The cooling device 10 having a cooling area 12, the cooling device 10 being configured to be arranged on the first face 5 of the nacelle 101, the first face 5 has a longitudinal extension e in the wind direction w.

The cooling circuit 2 and the cooling device 10 being fluidly connected via one or more connection unit(s) 3 so that the cooling fluid may flow in the cooling device 10 and the cooling circuit 2 via the connection unit 3.

Furthermore, the cooling device 10 being configured to be movable between a first position P1, in which the cooling area 12 is substantially perpendicular to the first face 5 and a second position P2 (shown in dotted lines in Fig. 2) in which the cooling area 12 is substantially parallel with the first face 5.

According to the invention, the connection unit 3 comprises a fluid swivel 4, the fluid swivel 4 being configured to provide pressurised fluid communication between the cooling device 10 and the cooling circuit 2 at least in the first position P1 of the cooling device 10 and the second position P2 of the cooling device 10. The fluid swivel will be described further below.

The cooling device 10, when being moved between the first position P1 and the second position P2, or vice versa, may have a plurality of intermediate positions PI (shown in dotted lines in Fig. 2). The fluid swivel 4 being configured to provide fluid communication between the cooling device 10 and the cooling circuit 2 in the plurality of intermediate positions PI.

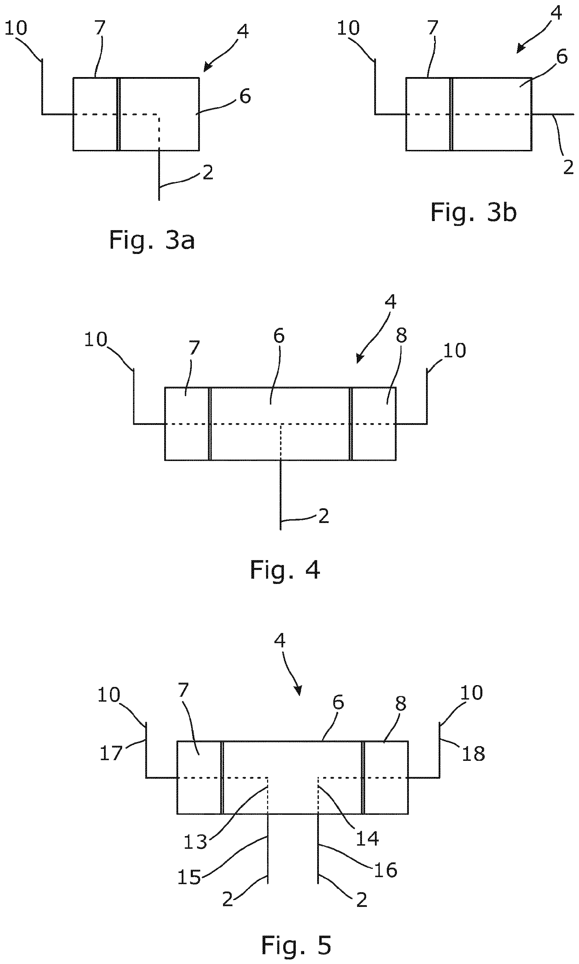

Fig. 3a shows an embodiment of the fluid swivel 4. The fluid swivel 4 comprises a first part 6 and a second part 7 being fluidly connected with each other, the first part 6 is fluidly connected with the cooling circuit 2 and the second part is connected with the cooling device 10. In the present embodiment, the second part 7 is rotably connected with the first part 6, so that the second part 7 may rotate in relation to the first part 6. In other embodiments, it may be the first part which is rotable in relation to the second part. The cooling fluid may flow in either direction, i.e. from the cooling circuit to the cooling device or vice versa, i.e. from the cooling device to the cooling circuit.

Fig. 3b shows another embodiment of the fluid swivel 4 shown in Fig. 3a. The fluid swivel 4 comprises in this embodiment also a first part 6 and a second part 7 being fluidly connected with each other, the first part 6 is fluidly connected with the cooling circuit 2 and the second part is connected with the cooling device 10. The difference of the embodiment shown in Fig. 3b compared to the embodiment shown in Fig. 3a is that the flow into and out of the fluid swivel is parallel. In the present embodiment, the second part 7 is rotably connected with the first part 6, so that the second part 7 may rotate in relation to the first part 6. In other embodiments, it may be the first part which is rotable in relation to the second part. The cooling fluid may flow in either direction, i.e. from the cooling circuit to the cooling device or vice versa, i.e. from the cooling device to the cooling circuit.

In Fig. 4, another embodiment of the fluid swivel 4 is shown. In this embodiment, the fluid swivel 4 comprises a first part 6, a second part 7 and a third part 8 being fluidly connected with each other, the first part 6 is fluidly connected with the cooling circuit 2 and both the second part 7 and the third part 8 are connected with the cooling device 10. Both the second part 7 and the third part 8 are rotably connected with the first part 6. The cooling fluid may flow in either direction, i.e. from the cooling circuit to the cooling device or vice versa, i.e. from the cooling device to the cooling circuit. In present embodiment, the first part 6 of the fluid swivel 4 may be used to divide a flow of cooling fluid from the cooling circuit 2 to two inlets to the cooling device 10 or it may be used to unify the flow of cooling fluid from two outlets from the cooling device to one inlet to the cooling circuit.

In Fig. 5, another embodiment of the fluid swivel 4 is shown. In this embodiment, the fluid swivel 4 also comprises a first part 6, a second part 7 and a third part 8 being fluidly connected with each other, the first part 6 is fluidly connected with the cooling circuit 2 and both the second part 7 and the third part 8 are connected with the cooling device 10. Both the second part 7 and the third part 8 are rotably connected with the first part 6.

In the present embodiment, the first part 6 may have a first port 13 connected with the second part 7 and a circuit outlet 15, respectively, and the first part 6 having a second port 14 connected with the third part 8 and a circuit inlet 16, respectively. The second part 7 may be connected with a first device inlet 17 of the cooling device 10 and the third part 8 being connected with a first device outlet 18 of the cooling device 10. The cooling fluid may then flow from the cooling circuit 2 via the circuit outlet 15 into the first port 13 of the first part 6 into the second part 7 and via the first device inlet 17 into the cooling device 10. And from the cooling device 10, the cooling fluid flows into the third part 7 via the first device outlet 18 and hereinafter into the second port 14 of the first part 6 and then into the circuit inlet 16 to the cooling circuit 2.

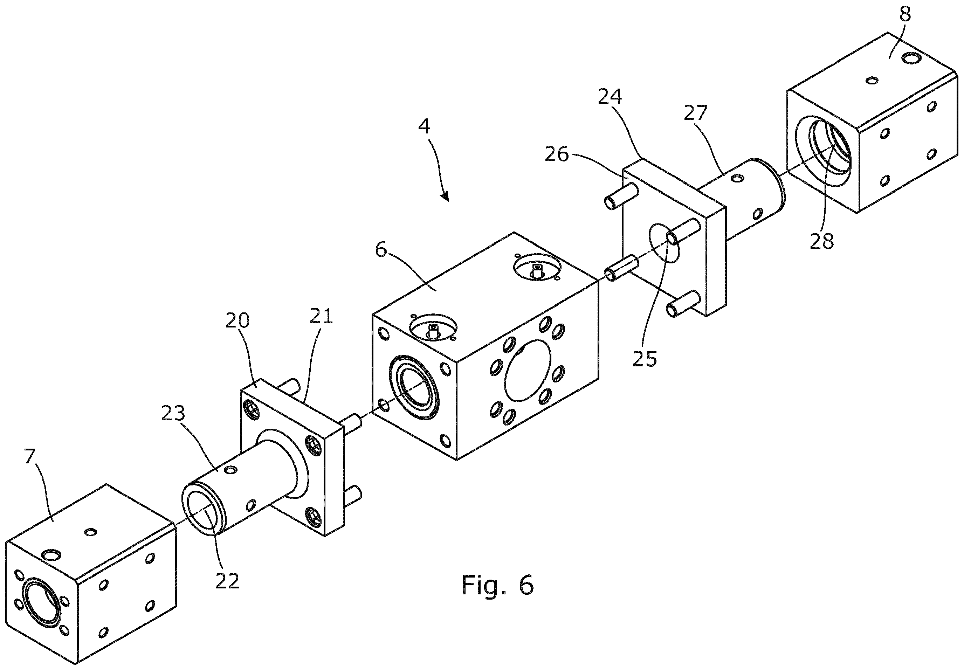

In Fig. 6, an embodiment of the fluid swivel 4 is shown in an exploded view. The fluid swivel 4 comprises a first part 6, a second part 7 and a third part 8 being fluidly connected with each other. Both the second part 7 and the third part 8 are rotably connected with the first part 6.

Between the first part 6 and the second part 7 a first connection piece 20 is arranged. The first connection piece 20 has a through-bore 22 and a first end 21, which is connected to the first part 6. The first connection piece 20 has a second end 23 which has a circular pipe shape. The second end 23 of the first connection piece 20 is configured to be inserted into a corresponding circular pipe-shaped area (not shown) of the second part 7. In the present embodiment, the second part 7 is configured to rotate around the second end 23 of the first connection piece 20. In the same manner, a second connection piece 24 is arranged between the first part 6 and the third part 8. The second connection piece 24 has a through-bore 25 and a first end 26 which is connected to the first part 6. The second connection piece 24 has a second end 27 which has a circular pipe shape. The second end 27 of the second connection piece 24 is configured to be inserted into a corresponding circular pipe-shaped area 28 of the third part 8. In the present embodiment, the third part 8 is configured to rotate around the second end 27 of the second connection piece 24.

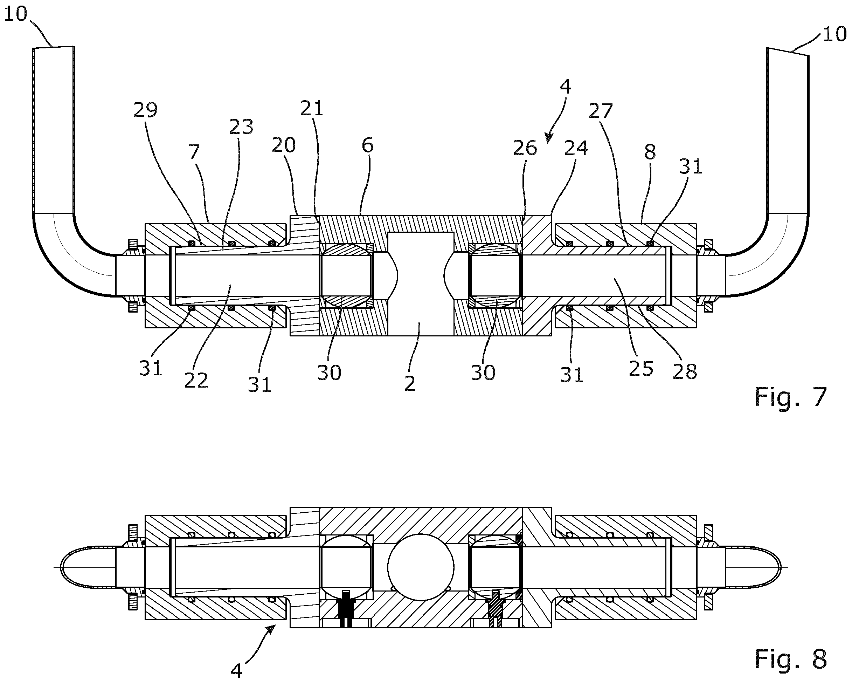

Figs. 7 and 8 show the fluid swivel 4 of Fig. 6 in cross-sectional views. In Fig. 7, the fluid swivel 4 has the first part 6, the second part 7 and the third part 8 being fluidly connected with each other. Both the second part 7 and the third part 8 are rotably connected with the first part 6. The first connection piece 20 is arranged between the first part 6 and the second part 7. The first connection piece 20 has the through-bore 22 extending between the first end 21 and the second end 23 of the first connection piece 20. The circular pipe shaped second end of the first connection pipe 20 is configured to be inserted into a corresponding circular pipe-shaped area 29 of the second part 7. In the present embodiment, the second part 7 is configured to rotate around the second end 23 of the first connection piece 20. Between the first connection piece 20 and the first part 6 a sealing 30 is arranged for ensuring that the cooling fluid not will leak. In the same manner, sealing elements 31 are arranged between the circular pipe shaped second end 23 of the first connection pipe 20 and the corresponding circular pipe-shaped area 29 of the second part 7 for ensuring a leak-tight connection between them during rotation of the second part 7 around the circular pipe-shaped second end 23 of the first connection piece 20 and thereby rotation of the second part 7 in relation to the first part 6.

The second connection piece 24 is arranged between the first part 6 and the third part 8. The second connection piece 24 has the through-bore 25 extending between the first end 26 and the second end 27 of the second connection piece 24. The circular pipe shaped second end of the second connection pipe 24 is configured to be inserted into a corresponding circular pipe-shaped area 28 of the third part 8. In the present embodiment, the third part 8 is configured to rotate around the second end 27 of the second connection piece 24. Between the second connection piece 24 and the first part 6 a sealing 30 is arranged for ensuring that the cooling fluid not will leak. In the same manner, sealing elements 31 are arranged between the circular pipe shaped second end 27 of the second connection pipe 24 and the corresponding circular pipe-shaped area 28 of the third part 8 for ensuring a leak-tight connection between them during rotation of the third part 8 around the circular pipe-shaped second end 27 of the second connection piece 24 and thereby rotation of the third part 8 in relation to the first part 6.

The fluid swivel 4 is configured to either divide the flow from the cooling circuit 2 to the cooling device 10 or unify the flow from the cooling device 10 to the cooling circuit 2.

Fig. 8 shows, in the same manner as Fig. 7, another cross-sectional view of the fluid swivel 4 from Fig. 6.

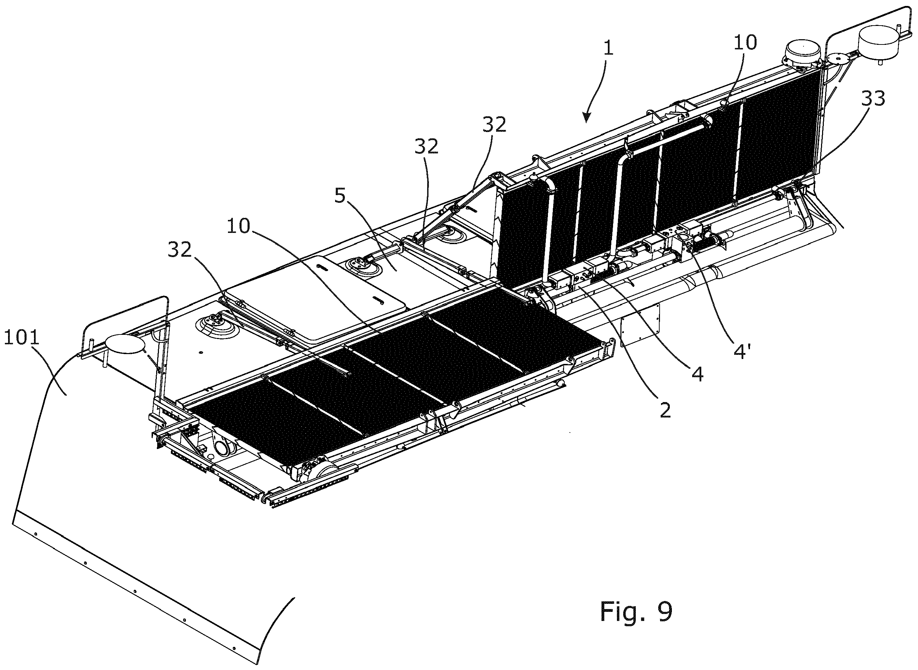

Fig. 9 shows a cooling system 1 according to the present invention. In the present embodiment, the cooling system 1 comprises two cooling devices arranged between each other on the first face 5 of the nacelle 101. Each cooling device comprises a first fluid swivel 4 and a second fluid swivel 4'. In the present embodiment, the first fluid swivel 4 ensures fluid communication from the cooling circuit 2 to the cooling device 10 and the second fluid swivel 4' ensures fluid communication from the cooling device 10 to the cooling circuit 2.

As depicted, the cooling device 10 to the right side is in the first position wherein it is substantially in an upright position. The cooling device to the left side is in the second position wherein it is substantially parallel with the first face 5 of the nacelle 101. As shown in Fig. 2, the cooling device may also have any intermediate position between the first position and the second position while having pressurised fluid communication through the fluid swivels.

Furthermore, one or more support units 32 are arranged between the cooling device 10 and the first face 5 of the nacelle 101 for supporting the cooling device. In addition, hinges 33 may also be arranged for assisting in the movement of the cooling device in relation to the first face of the nacelle 101.

In addition, meteorology equipment 34 or light or other equipment may be mounted on the cooling devices in an opposite end of the end being connected with the first face 5. By the inventive idea, service and maintenance of this equipment may be performed without adding ladders, anchoring points, etc. for the service staff by moving the cooling device from the first position to the second position.

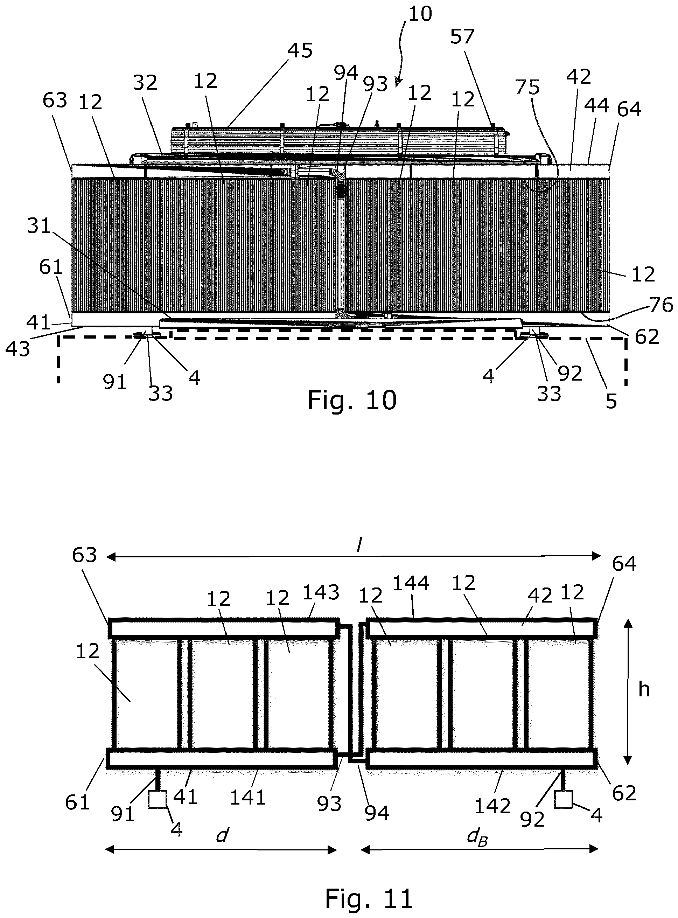

Fig. 10 shows a cooling device. The cooling device 10 may comprise:
- at least one heat exchanger core 12 configured to extend across the wind direction and to define a cooling area of the cooling device 10, the heat exchanger core 12 having a first side 75 and a second side 76 arranged opposite the first side in relation to the heat exchanger core,
- a first manifold 42 being arranged along the first side 75 and a second manifold 41 being arranged along the second side 76 each in fluid communication with the at least one heat exchanger core 12, the pair of manifolds 41, 42 extending parallel along the cooling area.

To increase the cooling area and/or increase the flexibility of the cooling capacity by adding or subtracting the heat exchanger cores 12, the cooling device 10 may, in one embodiment, comprise a plurality of heat exchanger cores 12 in a row extending along the cooling area.

By pumping cooling fluid through the cooling pipes extending throughout the heat exchanger core(s), a pressure drop occurs towards the outlet(s) of the heat exchanger due to both the cooling of the cooling fluid in the heat exchanger core(s) and most importantly due to the relatively thin and winding coolant pipes. A solution in order to reduce the pressure drop is described below:

Again referring to Fig. 10, the first manifold 42 and second manifold 41 each have a proximal end 61, 63 and a distal end 62, 64 along a length I of the cooling area, i.e. the first manifold 42 has the proximal end 63 and the distal end 64 and the second manifold 41 has the proximal end 61 and the distal end 62. In one embodiment, one of the manifolds 41, 42 comprises a coolant inlet 91 disposed in the proximity of the proximal end 61, 63, and one of the manifolds 41, 42 comprises a coolant outlet 92 disposed in the proximity of the distal end 62, 64.

Preferably, the second manifold 41 comprises the coolant inlet 91 and the coolant outlet 92. By the fluid swivel and the above a simple and expedient fitting of the cooling device 10 to the cooling circuit interface situated inside the nacelle 101, since the cooling fluid does not have to be rerouted by means of connecting hoses to the first manifold from the nacelle or having additional structures with passages for leading the cooling fluid upwards towards the first manifold of the cooling device.

With further reference to Figs. 10 and 11, the manifolds 41, 42 are connected by means of a first fluid connection 93 and second fluid connection 94. The fluid connections 93 and 94 extend outside the heat exchanger cores 12. The second manifold 41 comprises a proximal second manifold compartment 141 and a distal second manifold compartment 142, said manifold compartments being separate from one another, i.e. said compartments are not in direct fluid communication. The first manifold compartment 42 comprises a proximal first manifold compartment 143 and a distal first manifold compartment 144, said manifold compartments being separate from one another, i.e. said compartments are not in direct fluid communication. The first fluid connection 93 connects the proximal second manifold compartment 141, and the distal first manifold compartment 144 and the second fluid connection 94 connect the proximal first manifold compartment 143 and the distal second manifold compartment 142.

Hence, fluid communication is provided between the first and second manifolds without the cooling fluid entering the cooling pipes of the heat exchanger cores 12. The flow of cooling fluid running through the cooling pipes of the one or more heat exchanger cores 12 is thus split, effectively reducing the pressure drop through the cooling device 10.

The compartments of the second manifold 41 and the first manifold 42 may be both separate manifold units extending along the length of the cooling area connected by means of the fluid connections 93, 94. Said compartments may also be achieved by providing the second manifold 41 and first manifold 42 with fluid-tight separating walls.

The fluid connections 93 and 94 may be for example hoses or pipes which extend in a vertical direction parallel to cooling pipes of the heat exchanger cores 12. Advantageously, the ends of each fluid connection are bent so as to connect to the compartments of the first manifold 42 and second manifold 41.

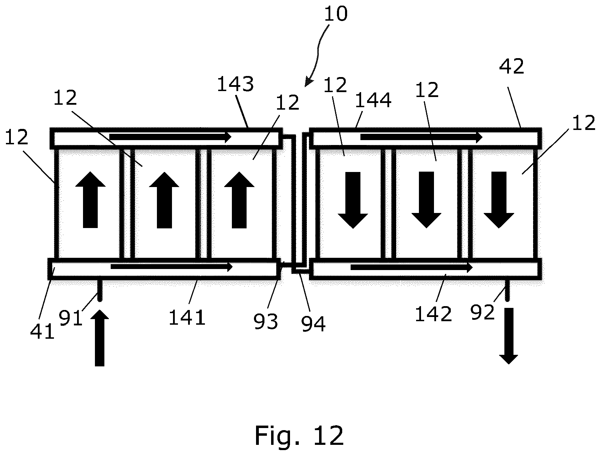

Referring to Fig. 12, one embodiment of the cooling fluid flow through the cooling device 10 is shown. The cooling fluid flow is referenced with the arrows extending through the cooling device 10. As seen in said figure, the cooling fluid flows through the cooling device 10 in a figure-8 type manner, wherein the cooling fluid enters the cooling device via the inlet 91 and exits via the outlet 92. The cooling fluid flow may also have other directions which will be appreciated by the skilled person.

The warm cooling fluid entering through the inlet 91 is led into the proximal second manifold compartment 141 of the second manifold 41, wherein it is distributed through the heat exchanger cores 12 connected to said compartment. However, a portion of the cooling fluid will be led through the fluid connection 93 and thereby enter the distal first manifold compartment 144 of the first manifold 42. In the distal first manifold compartment 144, the warm cooling fluid is led downwards through the cooling pipes of the heat exchanger cores 12 connected with said compartment, thus entering the distal second manifold compartment 142. Said distal second manifold compartment is connected with the outlet 92, whereby the cooling fluid is led back into the wind turbine nacelle.

The portion of the cooling fluid which is led upwards through the heat exchanger cores connected to the proximal second manifold compartment 141 is led into the proximal first manifold compartment 143 and is consequently cooled along the way. The now cooled cooling fluid inside said proximal first manifold compartment 143 is led to the distal second manifold compartment 142 by means of the second fluid connection 94. Said distal second manifold compartment is connected with the outlet 92, whereby the cooling fluid is led back into the wind turbine nacelle.

Thus, all of the cooling fluid entering the cooling device is cooled while the cooling flow is effectively split between different portions of the cooling area, i.e. different heat exchanger cores 12. Due to the cooling fluid's tendency to choose the path of the least resistance and the length of the fluid connections being similar to the length of the cooling pipes of heat exchanger cores, a portion of the cooling fluid will pass through the first fluid connection 93 without entering the heat exchanger cores 12 in fluid communication with the manifold compartments 141 and 143. Hence, not all of the cooling fluid will be forced to enter through the thin cooling pipes at the same positon along the cooling area, whereby the pressure drop is severely reduced.

To minimise the pressure drop, the first fluid connection 93 is adapted to distribute approximately 45-55% of the cooling fluid entering the proximal second manifold compartment 141 directly to the distal first manifold compartment 144 without the cooling fluid entering the heat exchanger cores 12. Accordingly, approximately 45-55% of the cooling fluid will be cooled directly through the aforementioned heat exchanger cores 12 and then pass to the outlet 92 via the second fluid connection 94 and the distal second manifold compartment 142. This may be achieved by dimensioning the length and/or flow diameter of the first fluid connection 93. so as to alter the pressure distribution in relation to the cooling pipes of the heat exchanger cores 12.

As is known to the skilled person, the most optimal flow pattern through a cooling device is for the cooling fluid to flow diagonally from top to bottom. Hence, it is particularly advantageous to utilise the split-flow features described above in a cooling device with the inlet 91 and 92 in connection to the second manifold 41. This allows for a cooling device which is easier and more cost-efficient to mount to an existing wind turbine nacelle by allowing for mounting in a single plane, i.e. on the first face 5 of the nacelle. Furthermore, the split-flow features allows for a diagonal flow between the first and second manifolds through the cooling device, which leads to a more efficient cooling in comparison to a non-split cooling device with the inlet and outlet being connected to the second manifold, since the cooling device 10 at least partly achieves the desired diagonal flow pattern (between the distal manifold compartments). Accordingly, a cooling device which is both more efficient in terms of cooling and easier to mount to a wind turbine nacelle is achieved.

Referring again to Fig. 11, the fluid connections 93, 94 may be disposed at a distance d along the length l from the proximal end 61, 63, whereby 0.25l < d < 0.75l, and more preferably 0.4l < d <0.6l. Thus, the structural load generated by the pressure drop is distributed more evenly along the length of the cooling device, making the cooling device more robust and sturdy.

To further decrease the pressure drop, further fluid connections and separate compartments of the first and second manifolds may be provided. Accordingly, the cooling device 10 may further comprise a first additional fluid connection connecting the distal second manifold compartment 142 to an additional first manifold compartment and a second additional fluid connection connecting the distal first manifold compartment 144 to an additional second manifold compartment, the additional manifold compartments being disposed along the length I of the cooling area distally to the distal manifold compartments 142, 144.

To optimise the distribution of the load generated by the pressure drop, the first and second fluid connections 93, 94 may be disposed at a distance d1 along the length I from the proximal end 61, 63, and the first and second additional fluid connections may be disposed at a distance d2 along the length l from the proximal end 61, 63, whereby 0.25l < d1 < 0.45l and 0.55l < d2 <0.75l.

As is recognised by the skilled person, any number of evenly distributed additional fluid connections and manifold compartments along the length of the cooling area may be applicable.

The cooling device 10 may further comprise an expansion vessel 45 in fluid connection with one of the manifolds 41, 42. Thus, the cooling device becomes more robust and sustainable for rapid changes in pressure due to the expansion vessel being partially filled with air which can absorb excess pressure as well as cushion shocks due to water hammer. The expansion vessel 45 may have a volume of approximately 20% of the volume of the cooling medium.

Preferably, again referring to Fig. 11, the length I of the cooling area defined by the at least one heat exchanger 12 is approximately 3-10 metres. A height h of said cooling area defined by the at least one heat exchanger 12 may be approximately 1-4 metres.

Although the invention has been described in the above in connection with preferred embodiments of the invention, it will be evident for a person skilled in the art that several modifications are conceivable without departing from the invention as defined by the following claims.

## Claims

1. A cooling system (1) for a wind turbine (100), comprising
- a cooling circuit (2) arranged inside a nacelle (101),
- a cooling fluid circulating in the cooling circuit (2),
- a cooling device (10) having a cooling area (12), the cooling device being configured to be arranged on a first face (5) of the nacelle, the first face has a longitudinal extension (e) in a wind direction (w),
- the cooling circuit (2) and the cooling device (10) being fluidly connected via one or more connection unit(s) (3), so that the cooling fluid may flow in the cooling device (10) and the cooling circuit (2),
- the cooling device (10) being configured to be movable between a first position (P1) in which the cooling area (12) is substantially perpendicular to the first face (5) and a second position (P2) in which the cooling area (12) is substantially parallel with the first face (5),
wherein the connection unit (3) comprises a fluid swivel (4), the fluid swivel (4) being configured to provide pressurised fluid communication between the cooling device (10) and the cooling circuit (2) at least in the first position (P1) of the cooling device (10) and the second position (P2) of the cooling device (10).

2. A cooling system (1) according to claim 1, wherein the fluid swivel (4) comprises a first part (6) and a second part (7) being fluidly connected to each other, the first part (6) is fluidly connected with the cooling circuit (2) and the second part (7) is connected with the cooling device (10).

3. A cooling system (1) according to claim 2, wherein the second part (7) is rotably connected with the first part (6) or vice versa.

4. A cooling system (1) according to claim 2 or 3, wherein the fluid swivel (4) comprises a third part (8) being fluidly connected with the first part (6), the third part (8) is connected with the cooling device (10).

5. A cooling system (1) according to claim 4, wherein the second part (7) is connected with a first device inlet of the cooling device and the third part is connected with a first device outlet of the cooling device, or the second part is connected with the first device inlet of the cooling device and the third part is connected with a second device inlet of the cooling device, or the third part is connected with the first device outlet of the cooling device and the second part is connected with a second device outlet of the cooling device.

6. A cooling system (1) according to claim 5, wherein the first part (6) has a first port connected with the second part (7) and a circuit outlet, respectively, and the first port has a second port connected with the third part and a circuit inlet, respectively, or the first part has a first port connected with both the second part and the third part and a circuit outlet, respectively, or the first part has a first port connected with both the second part and the third part and a circuit inlet, respectively.

7. A cooling system (1) according to claim 2 to 6, wherein sealing elements are arranged between the first part and the second part and/or between the first part and the third part.

8. A cooling system (1) according to any of the preceding claims, wherein the cooling device (10) when being moved between the first position (P1) and the second position (P2), or vice versa, has a plurality of intermediate positions (PI), the fluid swivel (4) being configured to provide fluid communication between the cooling device (10) and the cooling circuit (2) in the plurality of intermediate positions.

9. A cooling system (1) according to any of the preceding claims, wherein one or more support unit(s) is/are arranged between the cooling device and the top face of the nacelle.

10. A cooling system (1) according to any of the preceding claims, wherein the cooling device (10) comprises
- at least one heat exchanger core configured to extend across the wind direction and to define a cooling area of the cooling device, the heat exchanger core having a first side and a second side arranged opposite the first side in relation to the heat exchanger core,
- a first manifold being arranged along the first side and a second manifold being arranged along the second side, each in fluid communication with the at least one heat exchanger core, the first manifold and the second manifold are extending parallel along the cooling area.

11. A cooling system (1) according to claim 10, wherein the cooling device (10) comprises a plurality of heat exchanger cores in a row extending along the cooling area.

12. A cooling system (1) according to claim 11, wherein each heat exchanger core is configured to be moved from the first position to the second position, or vice versa, independently of the other heat exchanger cores.

13. A cooling system (1) according to any of the preceding claims, wherein meteorology equipment is arranged in connection with the cooling device.

14. A wind turbine (100) comprising a cooling system (1) according to any of the preceding claims.

15. A method for preparing a cooling system (1) according to any of the claims 1 to 13, comprising
- providing a nacelle at a manufacturing facility,
- arranging the cooling circuit inside the nacelle,
- mounting the cooling device on the first face of the nacelle,
- filling the cooling circuit and the cooling device with a cooling fluid,
- testing the cooling system while the cooling device is in the first position for ensuring fluid communication between the cooling device and the cooling circuit in the first position,
- arranging the cooling device in the second position,
- testing the cooling system while the cooling device is in the second position for ensuring fluid communication between the cooling device and the cooling circuit in the second position,
- transporting the nacelle with the cooling system to an erection site, while the cooling device is in its second position and having pressurised fluid communication between the cooling device and the cooling circuit.
